# EUROPÄISCHE PATENTSCHRIFT

(11) **EP 2 118 545 B1**
(45) Veröffentlichungstag und Bekanntmachung des Hinweises auf die Patenterteilung: **22.09.2010**
(21) Anmeldenummer: 08716185.7
(22) Anmeldetag: 01.03.2008
(51) Int. Cl.: F16K 41/10

(54) **VORRICHTUNG ZUR ÜBERWACHUNG EINES HERMETISCH DICHTEN VENTILINNENRAUMS**
DEVICE FOR MONITORING A HERMETICALLY SEALED VALVE INTERIOR
DISPOSITIF PERMETTANT DE CONTRÔLER UN ESPACE INTÉRIEUR DE SOUPAPE HERMÉTIQUE

(30) Priorität: 15.03.2007 DE 102007013476
(43) Veröffentlichungstag der Anmeldung: 18.11.2009
(73) Patentinhaber: SUEDMO HOLDING GMBH, 73469 Riesbuerg (DE)
(72) Erfinder: STARK, Heiko, 86757 Wallerstein (DE); NEUHAUSER, Frank, 73450 Neresheim (DE)
(74) Vertreter: Witte, Weller & Partner
(86) Internationale Anmeldenummer: PCT/EP2008/001665
(87) Internationale Veröffentlichungsnummer: WO 2008/110277

(56) Entgegenhaltungen:
- EP-A- 0 945 658
- DE-A1- 4 334 262
- DE-A1- 4 419 487

## Beschreibung

Die Erfindung betrifft eine Vorrichtung zur Überwachung eines hermetisch dichten Ventilinnenraums eines aseptischen Ventils für die chemische oder Lebensmittelindustrie, mit einem Behälter, dessen Innenraum mit einer Flüssigkeit befüllbar und mit dem zu überwachenden Ventilinnenraum flüssigkeitsleitend verbindbar ist, wobei der Behälter ein Oberteil und ein Unterteil aufweist, die miteinander verbunden sind, und mit einem Ausgleichsbehältnis, das mit dem Innenraum des Behälters über eine Ausgleichsleitung verbunden ist.

Eine solche Vorrichtung ist aus dem Dokument DE 44 19 487 A1 bekannt.

Eine Vorrichtung der eingangs genannten Art dient beispielsweise dazu, den Innenraum eines Ventilbalgs eines aseptischen Ventils für die chemische oder Lebensmittelindustrie auf eine mögliche Leckage hin zu überwachen.

Aseptische Ventile für die chemische oder Lebensmittelindustrie weisen üblicherweise einen Ventilbalg oder eine Manschette auf, um den Antrieb eines oder mehrerer Absperrorgane gegenüber dem Innenraum des Ventilsgehäuses, in dem ein chemisches oder Lebensmittelprodukt fließt, hermetisch dicht zu trennen, damit es ausgeschlossen ist, dass das Produkt und mögliche Produktverschleppungen mit der Atmosphäre in Kontakt kommt bzw. kommen. Durch den Kontakt des Produktes mit der Außenatmosphäre kann das Produkt verunreinigt werden.

Die Dichtigkeit und Unversehrtheit des Ventilbalgs oder der Manschette muss bei einem laufenden Prozess aus Gründen der Prozesssicherheit ständig überwacht werden, wozu die eingangs genannte Vorrichtung dient.

Der Ventilbalginnenraum (Manschetteninnenraum) ist zum Zwecke der Überwachung mit einer physiologisch unbedenklichen Flüssigkeit, üblicherweise Glyzerin, gefüllt. Der Ventilbalginnenraum steht über eine Verbindungsleitung mit dem Behälter der eingangs genannten Vorrichtung in Verbindung, wobei der Innenraum des Behälters ebenfalls mit der gleichen Flüssigkeit gefüllt ist, die im Ventilbalginnenraum vorhanden ist. Beim Schalten des aseptischen Ventils wird der Ventilbalg entsprechend dem Hub des Absperrorgans zwischen der Offenstellung und der Schließstellung gestaucht und gedehnt. Beim Stauchen des Ventilbalgs wird aus dem Balginnenraum entsprechend Flüssigkeit in den Behälter verdrängt, und bei einer Dehnung des Ventilbalgs strömt umgekehrt Flüssigkeit aus dem Behälter in den Ventilbalginnenraum. Im ordnungsgemäßen Zustand des Ventilbalgs bilden der Ventilbalginnenraum und der Innenraum des Behälters ein geschlossenes, nach außen dichtes System.

Der Flüssigkeitsstand im Behälter variiert im ordnungsgemäßen Zustand des Ventilbalgs entsprechend der Schließstellung und der Offenstellung des Ventils zwischen einem maximalen und einem minimalen Wert, wobei der Füllstand in dem Behälter permanent erfasst wird.

Tritt nun ein Defekt, bspw. ein Riss im Ventilbalg auf, ändern sich im Behälter beim Schalten des Ventils der maximale Füllstand oder der minimale Füllstand, was eine entsprechende Fehlermeldung auslöst. Es kann aber auch sein, dass sich der Defekt des Ventilbalgs nicht in einer Änderung des maximalen oder minimalen Füllstands im Behälter äußert. Zu diesem Zweck wird die Flüssigkeit im Behälter zusätzlich auch hinsichtlich ihres Leitwertes überwacht, der sich ändert, wenn ein Produkt in den Ventilbalginnenraum eindringt und dann in den Behälter gelangt.

Entsprechend des im Behälter aufgrund der Schaltbewegungen des Ventils variierenden Füllstands der Flüssigkeit muss aus dem Innenraum des Behälters über der Flüssigkeit befindliche Luft in das Ausgleichsbehältnis verdrängt werden, wozu das Ausgleichsbehältnis gasleitend mit dem Luftraum des Innenraums des Behälters verbunden ist. Das Ausgleichsbehältnis führt, wenn es als Balg ausgeführt ist, entsprechend der Füllstandsänderung eine "Atmungs"-Bewegung aus, d.h. dehnt sich aus bzw. zieht sich zusammen, je nachdem ob Luft in das Ausgleichsbehältnis hineinverdrängt wird oder aus dem Ausgleichsbehältnis wieder in den Luftraum des Innenraums des Behälters zurückströmt. Das Ausgleichsbehältnis stellt mit dem Innenraum des Behälters somit ebenfalls ein geschlossenes System dar.

Bei der aus dem oben genannten Dokument DE 44 19 487 A1 bekannten Überwachungsvorrichtung sind das Oberteil und das Unterteil an ihrer Verbindungsstelle mittels einer Schelle aneinander befestigt. Das Ausgleichsbehältnis ist seitlich oberhalb des Behälters angeordnet, wobei sich die Ausgleichleitung von der Unterseite des Ausgleichsbehältnisses rohrbogenartig zu einem seitlichen Anschluss im oberen Bereich des Unterteils des Behälters erstreckt. Die Verbindungsleitung zwischen dem Behälter und dem zu überwachenden Ventilbalg bzw. den zu überwachenden Ventilbälgen ist an der Unterseite des Bodens des Unterteils des Behälters angeschlossen.

Die bekannte Überwachungsvorrichtung hat den Nachteil, dass die Dichtheit der Verbindung zwischen dem Oberteil und dem Unterteil durch die Schelle nicht sicher gewährleistet ist, und außerdem die Abdichtung zwischen dem Ausgleichsbehältnis und dem Behälterinnenraum zusätzliche Dichtungen erfordert. Außerdem ist der Platzbedarf der bekannten Überwachungsvorrichtung nachteilig groß, weil das Ausgleichsbehältnis seitlich von dem Behälter angeordnet ist.

Der Erfindung liegt daher die Aufgabe zugrunde, eine Vorrichtung zur Überwachung eines hermetisch dichten Ventilinnenraums, insbesondere Ventilbalginnenraums eines aseptischen Ventils für die chemische oder Lebensmittelindustrie der eingangs genannten Art dahingehend weiterzubilden, dass die vorstehend beschriebenen Nachteile vermieden werden, insbesondere eine kompakte Bauweise erreicht wird, und außerdem mit wenig Teilen die erforderliche Dichtheit des Behälters einerseits und des Systems aus Ausgleichsbehältnis und Behälter gewährleistet ist.

Erfindungsgemäß wird diese Aufgabe hinsichtlich der eingangs genannten Vorrichtung dadurch gelöst, dass das Oberteil und das Unterteil von einem als Schraube ausgebildeten Verbindungselement zusammengehalten sind, wobei sich ein langgestreckter Schraubenschaft der Schraube von einem Boden des Unterteils durch den Innenraum des Behälters bis zum Oberteil erstreckt, und dass das Ausgleichsbehältnis unter dem Boden des Unterteils angeordnet ist, und dass sich die Ausgleichsleitung von einem oberen Bereich des Innenraums des Behälters durch den Boden des Unterteils hindurch erstreckt.

Die erfindungsgemäße Überwachungsvorrichtung beruht auf einem neuen Konzept hinsichtlich der Verbindung des Oberteils mit dem Unterteil einerseits und der Anordnung des Ausgleichsbehältnisses andererseits.

Das Oberteil und das Unterteil des Behälters der erfindungsgemäßen Überwachungsvorrichtung werden von einer Schraube zusammengehalten, deren langerstreckter Schraubenschaft sich vom Boden des Unterteils bis zum Oberteil erstreckt und das Oberteil und das Unterteil durch auf beide Teile entgegengesetzt wirkende Zugkräfte fest gegeneinanderdrückt. Die Dichtigkeit zwischen dem Oberteil und dem Unterteil ist somit sicher gewährleistet.

Das Ausgleichsbehältnis der erfindungsgemäßen Überwachungsvorrichtung befindet sich nun nicht mehr seitlich des Behälters, sondern unter dem Boden des Unterteils, wodurch die Querabmessungen der erfindungsgemäßen Überwachungsvorrichtung gegenüber der bekannten Vorrichtung deutlich verringert sind. Damit das Ausgleichsbehältnis im Betrieb der Vorrichtung mit dem mit Luft bzw. Gas gefüllten Raum des Innenraums des Behälters kommunizieren kann, erstreckt sich die Ausgleichsleitung vom Ausgleichsbehältnis durch den Innenraum des Behälters und im befüllten Zustand des Behälters durch die Flüssigkeit hindurch bis in einen oberen Bereich des Innenraums des Behälters, wo sie in den Luft- bzw. Gasraum mündet. Auch die Ausgleichsleitung ist somit platzsparend in den Behälter integriert, anstatt seitlich am Behälter vorbeigeführt und über einen seitlichen Anschluss im oberen Bereich des Behälters mit dem Innenraum verbunden zu sein. Die Dichtigkeit des Systems Behälterinnenraum/Ausgleichsbehältnis ist somit einfach realisierbar.

Die erfindungsgemäße Überwachungsvorrichtung zeichnet sich somit insbesondere durch eine sehr kompakte Bauweise aus, die darüber hinaus hohe Anforderungen an die Dichtigkeit erfüllt.

In einer bevorzugten Ausgestaltung ist die Ausgleichsleitung durch einen innenseitig im Schraubenschaft vorhandenen Hohlraum gebildet, der im oberen Bereich des Innenraums des Behälters mündet.

In dieser Ausgestaltung übernimmt die Schraube zusätzlich die Funktion der Ausgleichsleitung zwischen dem Behälterinnenraum und dem Ausgleichsbehältnis, wodurch vorteilhafterweise ein weiteres Bauteil für die Ausgleichsleitung eingespart wird. Der weitere Vorteil dieser Maßnahme besteht darin, dass die Schraube die weitere Funktion eines Überlaufs für die im Behälter befindliche Flüssigkeit ausüben kann, wenn nämlich die Flüssigkeit im Innenraum des Behälters durch Eindringen von Produkt aus dem überwachten Ventilbalginnenraum ansteigt.

Alternativ zu der zuvor genannten Ausgestaltung ist es bevorzugt, wenn die Ausgleichsleitung durch ein den Schraubenschaft umgebendes Hohlrohr gebildet ist, das im oberen Bereich des Innenraums des Behälters mündet.

Diese Maßnahme hat gegenüber der zuvor genannten Maßnahme den Vorteil, dass der Schraubenschaft der Schraube massiv ausgebildet werden kann. Das Hohlrohr kann vorzugsweise einstückig mit dem Boden des Unterteils ausgebildet oder stoffschlüssig, bspw. durch Anschweißen, mit diesem verbunden sein.

In einer weiteren bevorzugten Ausgestaltung ist der Schraubenschaft von unten durch den Boden des Unterteils durchgeführt und mit einem Gewinde am Oberteil verschraubt, wobei ein Schraubenkopf der Schraube gegen die Unterseite des Bodens des Unterteils anliegt.

In dieser vorteilhaften Ausgestaltung werden das Oberteil und das Unterteil mittels einer einzigen Schraube ohne zusätzliche Muttern oder dergleichen und somit mit minimalem Teileaufwand miteinander verspannt, weil das Gegengewinde für die Schraube im Oberteil selbst ausgebildet ist, bspw. als Innengewinde, während das dem Schraubenkopf gegenüberliegende Ende des Schraubenschafts entsprechend mit einem Außengewinde versehen ist. Der Schraubenkopf drückt von unten gegen den Boden des Unterteils und verspannt das Unterteil mit dem Bodenteil somit zuverlässig. Ein weiterer Vorteil der beschriebenen Ausgestaltung besteht darin, dass eine weitestgehend glatte Oberfläche der AVU erreicht. Die Reinigungsfähigkeit wird dadurch optimiert. Es gibt weitestgehend keine Hinterschnitte, Pfützenbildung und Überschneidungen von Bauteilen.

Im Zusammenhang mit der zuvor genannten Ausgestaltung ist es weiterhin bevorzugt, wenn das Ausgleichsbehältnis gasdicht am Schraubenkopf festgelegt ist.

Das Ausgleichsbehältnis ist üblicherweise in Form eines Teflon- oder Elastomerbalgs ausgebildet, dessen eines Ende bspw. in einer Umfangsnut am Schraubenkopf lösbar festgelegt ist. Das Ausgleichsbehältnis sitzt somit in unmittelbarer Nähe am Boden des Unterteils, wodurch der Platzbedarf der erfindungsgemäßen Vorrichtung weiter verringert ist.

In einer weiteren bevorzugten Ausgestaltung weist die Ausgleichsleitung eine axial durch den Schraubenkopf hindurchgehende Bohrung auf, die in das Ausgleichsbehältnis mündet.

Diese Ausgestaltung ist insbesondere in Verbindung mit der zuvor genannten Ausgestaltung vorteilhaft, weil der Schraubenkopf zusätzlich zur Funktion der Verspannung zwischen Oberteil und Unterteil einen Teil der Ausgleichsleitung bildet, so dass das Ausgleichsbehältnis über den Schraubenkopf und das oben genannte Hohlrohr oder den Schraubenschaft selbst mit dem Innenraum des Behälters kommuniziert. In dieser Ausgestaltung besitzt die erfindungsgemäße Vorrichtung ein Minimum an Bauteilen, weil den einzelnen vorgesehenen Bauteilen mehrere Funktionen zugeordnet sind.

Insbesondere können am Schraubenkopf zwei oder mehrere solcher Bohrungen vorgesehen sein, die dann gleichzeitig zum Ansetzen eines Schlüssels, bspw. eines Stirnlochschlüssels zum Festziehen oder Lösen der Schraube bei der Montage oder bei der Öffnung des Behälters zu Wartungs- oder Reinigungszwecken dienen können.

In einer weiteren bevorzugten Ausgestaltung weist das Ausgleichsbehältnis an seinem freien Ende eine Abschlussplatte auf, die sich bei einem einen vorbestimmten Druck überschreitenden Überdruck im Ausgleichsbehältnis ablöst.

Das Ausgleichsbehältnis übernimmt in dieser Ausgestaltung vorteilhafterweise auch die Funktion einer Überdrucksicherung, indem die Abschlussplatte im Fall eines Überdrucks einfach abgesprengt wird. Eine solche Überdrucksituation kann bei einer Fehlfunktion des überwachten Ventilbalginnenraums entsehen, wenn Produkt unter hohem Druck in den Behälter eindringt, wobei das Produkt dann über die Ausgleichsleitung in das Ausgleichsbehältnis gelangt, in dem der Druck dann solange ansteigt, bis die Abschlussplatte sich ablöst und das Ausgleichsbehältnis zur Umgebung hin öffnet. Die Austrittsrichtung ist nach unten orientiert und definiert. Dies stellt einen Sicherheitsaspekt dar. Das abgeleitete Produkt wird definiert nach unten ausgestoßen und kann entsprechend abgeleitet werden.

In einer weiteren bevorzugten Ausgestaltung weist das Unterteil ein den Boden des Unterteils bildendes Bodenteil auf, wobei eine innenseitige Bodenfläche des Bodenteils radial nach außen ein Gefälle aufweist, und an dem Bodenteil ist vorzugsweise seitlich ein vorzugsweise verschwenkbarer Anschluss für eine Verbindungsleitung zu dem zu überwachenden Ventilinnenraum angeordnet.

Durch die von der Mitte des Bodens zum Behälterrand hin abschüssige Ausgestaltung des Bodens wird eine Sumpfbildung im Behälter vermieden, insbesondere wird eine vollständige Entleerung des Behälters ohne wesentliche Flüssigkeitsrückstände ermöglicht.

In einer weiteren bevorzugten Ausgestaltung weist das Unterteil eine sich im Wesentlichen vom Boden bis zum Oberteil erstreckende durchsichtige Umfangswand auf.

Diese an sich bekannte Maßnahme hat den Vorteil einer Sichtkontrolle der Flüssigkeit im Innenraum des Behälters.

Dabei ist es weiterhin bevorzugt, wenn am Oberteil innenseitig eine Lichtquelle zur Beleuchtung des Innenraums des Behälters angeordnet ist.

Diese Maßnahme hat nun den besonderen Vorteil, dass der Innenraum des Behälters im Betrieb beleuchtet werden kann, wodurch die vorstehend genannte Sichtkontrolle, insbesondere in lichtschwachen Umgebungen, gewährleistet ist. Als Lichtquelle können eine oder mehrere Leuchtdioden, die weißes oder farbiges Licht abstrahlen, verwendet werden. Die Lichtquelle kann auch durch eine entsprechende Steuerung als Anzeige für eine Fehlersituation dienen, indem bspw. im Falle eines auftretenden erfassten Fehlers, bspw. einer unerlaubten Füllstands- oder Leitwertabweichung die Lichtquelle vom kontinuierlichen Betrieb in einen intermittierenden Betrieb umschaltet.

In einer weiteren bevorzugten Ausgestaltung weist das Oberteil ein Messmodul mit Steuerelektronik zum Messen eines oder mehrerer Zustände der Flüssigkeit im Innenraum des Behälters auf, wobei das Oberteil ein Deckelteil aufweist, an dem das Messmodul lösbar befestigt ist.

Hierbei ist von Vorteil, dass die wie bei der bekannten Überwachungsvorrichtung vorgesehenen Messeinrichtungen für die Füllstandsmessung und die Leitwertmessung zu einem Messmodul zusammengefasst sind, das vom Deckelteil des Oberteils zu Wartungs- und Reparaturzwecken abgenommen werden kann. Die lösbare Befestigung erfolgt vorzugsweise mittels einer Schraubverbindung. Das Messmodul ist vorzugsweise durch Vergießen vollständig gekapselt und kann insbesondere die vorstehend genannte Lichtquelle tragen.

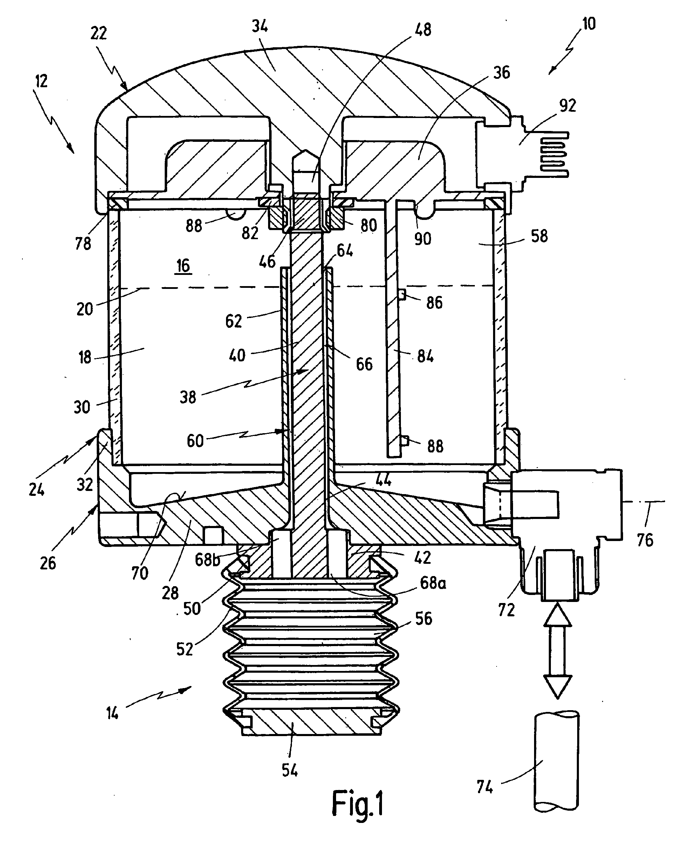

Weitere Vorteile ergeben sich aus der nachfolgenden Beschreibung und der beigefügten Zeichnung.

Es versteht sich, dass die vorstehend genannten und die nachstehend noch zu erläuternden Merkmale nicht nur in der jeweils angegebenen Kombination, sondern auch in anderen Kombinationen oder in Alleinstellung verwendbar sind, ohne den Rahmen der vorliegenden Erfindung zu verlassen.

Ein Ausführungsbeispiel der Erfindung ist in der einzigen Figur der Zeichnung dargestellt.

In der Figur ist eine mit dem allgemeinen Bezugszeichen 10 versehene Vorrichtung zur Überwachung eines hermetisch dichten Ventilinnenraums, insbesondere eines Ventilbalginnenraums oder Manschetteninnenraums eines aseptischen Ventils für die chemische oder Lebensmittelindustrie dargestellt. Ein solcher Ventilinnenraum, beispielsweise Ventilbalginnenraum eines aseptischen Ventils für die chemische oder Lebensmittelindustrie ist in dem Dokument DE 44 19 487 A1 dargestellt, dessen Offenbarung diesbezüglich durch unmittelbare Bezugnahme in der vorliegenden Offenbarung enthalten ist.

Die Vorrichtung 10 weist allgemein einen Behälter 12 und ein Ausgleichsbehältnis 14 auf, das vorzugsweise als Ausgleichsbalg ausgebildet ist.

Der Behälter 12 weist einen Innenraum 16 auf, der im Betrieb der Vorrichtung 10 mit einer Flüssigkeit 18, bspw. Glyzerin, bis zu einem maximalen Füllstand 20 gefüllt ist, wobei sich dieselbe Flüssigkeit im zu überwachenden Ventilinnenraum befindet.

Der Behälter 12 weist ein Oberteil 22 und ein Unterteil 24 auf, die miteinander dicht verbunden sind.

Das Unterteil 24 weist ein Bodenteil 26 mit einem Boden 28 auf. Das Unterteil 24 weist weiterhin eine durchsichtige Umfangswand 30 auf, durch die hindurch die Flüssigkeit 18 hindurch beobachtbar ist. Die Umfangswand 30, die entsprechend ein Schauglas bildet, ist als Rohr ausgebildet, das vorzugsweise aus Polysulfon gefertigt ist.

Die Umfangswand 30 ist an ihrem unteren Ende mit einem Ringflansch 32 des Bodenteils 26 dicht verbunden, bspw. durch Kleben.

Die Umfangswand 30 erstreckt sich vom Bodenteil 26 bis zum Oberteil 22.

Das Oberteil 22 weist ein Deckelteil 34 und ein Messmodul 36 auf, das nachfolgend noch beschrieben wird.

Das Oberteil 22 und das Unterteil 24 sind durch ein als Schraube 38 ausgebildetes Verbindungselement miteinander verbunden und fest zusammengehalten. Die Schraube 38 weist einen langerstreckten Schraubenschaft 40 und einen Schraubenkopf 42 auf. Die Schraube 38 ist insgesamt also einteilig bzw. einstückig ausgebildet.

Der Schraubenschaft 40 ist durch den Boden 28 des Unterteils 24 durch eine entsprechende Bohrung 44 in diesem durchgeführt und erstreckt sich bis zu dem Oberteil 22, genauer gesagt, dem Deckelteil 34 des Oberteils 22. Mit dem Deckelteil 34 ist der Schraubenschaft 40 über ein Gewinde 46, das ein Außengewinde ist, verschraubt, wozu das Deckelteil 34 eine entsprechende Sacklochbohrung 48 mit Innengewinde aufweist.

Der Schraubenkopf 42 liegt im festgezogenen Zustand der Schraube 38 gegen die Unterseite des Bodens 28 gasdicht an, wobei eine entsprechende Dichtung zusätzlich vorgesehen sein kann.

Das Ausgleichsbehältnis 14 ist unter dem Boden 28 in unmittelbarer Nähe zu diesem angeordnet. Das Ausgleichsbehältnis 14 ist mit seinem dem Boden 28 zugewandten Ende am Schraubenkopf 42 festgelegt, wobei der Schraubenkopf 42 zu diesem Zweck eine Umfangsnut 50 aufweist, in die das dem Boden 28 zugewandte Ende einer Balgwand 52 des Ausgleichsbehältnisses 14 gasdicht eingreift.

An dem dem Boden 28 abgewandten Ende weist das Ausgleichsbehältnis 14 eine Abschlussplatte 54 auf, die mit der Balgwand 52 lösbar, jedoch gasdicht verbunden ist. Wenn sich in dem Innenraum 56 des Ausgleichsbehältnisses 14 ein Druck aufbaut, der einen vorbestimmten Druck überschreitet, wird die Abschlussplatte 54 abgesprengt, und der Innenraum 56 ist dann zur Umgebung des Ausgleichsbehältnisses 14 offen.

Das Ausgleichsbehältnis 14, genauer gesagt, sein Innenraum 56, kommuniziert mit einem oberen Bereich 58 des Innenraums 16 des Behälters 12, in dem sich im ordnungsgemäßen Betriebszustand der Vorrichtung 10 ein Gas oder Luft befindet. Mit dem oberen Bereich 58 des Innenraums 16 des Behälters 12 kommuniziert das Ausgleichsbehältnis 14 über eine Ausgleichsleitung 60. Die Ausgleichsleitung 60 ist als Hohlrohr 62 ausgebildet, das den Schraubenschaft 40 umgibt. Das Hohlrohr 62 weist im oberen Bereich 58 des Innenraums 16 eine Mündung 64 auf.

Das Hohlrohr 62 weist einen Innendurchmesser auf, der größer ist als der Außendurchmesser des Schraubenschafts 40, so dass zwischen dem Schraubenschaft 40 und dem Hohlrohr 62 ein Kanal 66 verbleibt, durch den Luft bzw. Gas oder auch im Falle eines auftretenden Fehlers, bspw. einer Leckage im überwachten Ventilinnenraum, Flüssigkeit 18 nach unten in das Ausgleichsbehältnis 14 strömen bzw. fließen kann. Die Ausgleichsleitung 60 weist weiterhin eine, hier zwei durch den Schraubenkopf 42 hindurchgehende Bohrungen 68a und 68b auf, die sich durch den Schraubenkopf 42 axial hindurch erstrecken und in das Ausgleichsbehältnis 14, genauer gesagt, in dessen Innenraum 56 münden.

Das Hohlrohr 62 kann, wie in der Figur gezeigt, einstückig mit dem Boden 28 des Unterteils 24 ausgebildet oder mit dem Boden 28 stoffschlüssig, bspw. durch Schweißen, verbunden sein. Die Ausgleichsleitung 60 geht entsprechend durch den Boden 28 hindurch, und zwar durch die Bohrung 44, durch die der Schraubenschaft 40 hindurchgeführt ist. Die Bohrung 44 mündet dann in die Bohrungen 68a bzw. 68b im Schraubenkopf 42.

Die Bohrungen 68a und 68b dienen außerdem zum Ansetzen eines Stirnlochschlüssels zum Festziehen oder Lösen der Schraube 38 beim Zusammenbauen oder Zerlegen des Behälters 12.

Anstelle der Ausgestaltung der Ausgleichsleitung 60 als den Schraubenschaft 40 umgebendes Hohlrohr 62 kann die Ausgleichsleitung auch dadurch realisiert sein, dass der Schraubenschaft 40 selbst als Hohlrohr ausgebildet ist, der im oberen Bereich entsprechend eine Mündung aufweist.

Eine innenseitige Bodenfläche 70 des Bodens 28 weist von innen nach radial außen ein Gefälle auf, wobei an dem Bodenteil 26 seitlich ein Anschluss 72 zum Anschließen einer Verbindungsleitung 74 zu dem überwachten Ventilinnenraum angeordnet ist. Der Anschluss 72 ist um eine Schwenkachse 76 verschwenkbar ausgebildet.

Zum Abdichten des Unterteils 24 gegen das Oberteil 22 ist lediglich eine Dichtung 78, bspw. eine Ringdichtung, erforderlich, die zwischen dem oberen Ende der Umfangswand 30 und dem Oberteil 22 sitzt, wobei durch die Schraube 38 das Oberteil 22 und das Unterteil 24 durch gegenseitigen Zug fest zusammengehalten werden und die Dichtung 78 entsprechend fest und somit dichtend eingefasst ist.

Das Messmodul 36 ist mit dem Deckelteil 34 über eine Schraubverbindung lösbar verbunden, wobei die Schraubverbindung in dem gezeigten Ausführungsbeispiel eine Mutter 80 aufweist, die auf einen sich nach unten erstreckenden Außengewindefortsatz des Deckenteils 34 aufgeschraubt ist. Eine weitere Ringdichtung 82 dichtet den Innenraum 16 radial innenseitig gegen das Oberteil 22 ab.

Das Messmodul 36 weist einen Messfinger 84 mit Sensoren 86 und 88 zum Messen des Füllstands sowie des Leitwerts der Flüssigkeit 18 auf.

Das Messmodul 36 ist vorzugsweise vollständig durch Vergießen gekapselt.

Das Messmodul 36 trägt eine oder mehrere Leuchtdioden 90, die Weißlicht oder insbesondere farbiges Licht emittieren und damit den Innenraum 16 und die Flüssigkeit 18 be- bzw. durchleuchten. Der Füllstand der Flüssigkeit 18 in dem Innenraum 16 kann somit besonders gut optisch kontrolliert werden.

Des Weiteren können die LEDs 88, 90 so geschaltet sein, dass sie im Fall eines durch die Sensoren 86, 88 erfassten Fehlzustands von einem kontinuierlich leuchtenden Betrieb in einen intermittierend leuchtenden Betrieb umschalten, d.h. blinken, wodurch eine optische Fehleranzeige geschaffen wird.

Am Oberteil 22 ist schließlich noch ein Anschluss 92 zum Anschließen eines Kabels für die Spannungsversorgung und Steuerung des Messmoduls 36 angeordnet.

## Patentansprüche

1. Vorrichtung zur Überwachung eines hermetisch dichten Ventilinnenraums eines aseptischen Ventils für die chemische oder Lebensmittelindustrie, mit einem Behälter (12), dessen Innenraum (16) mit einer Flüssigkeit (18) befüllbar und mit dem zu überwachenden Ventilinnenraum flüssigkeitsleitend verbindbar ist, wobei der Behälter (12) ein Oberteil (22) und ein Unterteil (24) aufweist, die miteinander verbunden sind, und mit einem Ausgleichsbehältnis (14), der mit dem Innenraum (16) des Behälters (12) über eine Ausgleichsleitung (60) verbunden ist, **dadurch gekennzeichnet, dass** das Oberteil (22) und das Unterteil (24) von einem als Schraube (38) ausgebildeten Verbindungselement zusammengehalten sind, wobei sich ein langerstreckter Schraubenschaft (40) der Schraube (38) von einem Boden (28) des Unterteils (24) durch den Innenraum (16) des Behälters (12) bis zum Oberteil (22) erstreckt, und dass das Ausgleichsbehältnis (14) unter dem Boden (28) des Unterteils (24) angeordnet ist, und dass sich die Ausgleichsleitung (60) von einem oberen Bereich (58) des Innenraums (16) des Behälters (12) durch den Boden (28) des Unterteils (24) hindurch erstreckt.

2. Vorrichtung nach Anspruch 1, **dadurch gekennzeichnet, dass** die Ausgleichsleitung (60) durch einen innenseitig im Schraubenschaft (40) vorhandenen Hohlraum gebildet ist, der im oberen Bereich (58) des Innenraums (16) des Behälters (12) mündet.

3. Vorrichtung nach Anspruch 1, **dadurch gekennzeichnet, dass** die Ausgleichsleitung (60) durch ein den Schraubenschaft (40) umgebendes Hohlrohr (62) gebildet ist, das im oberen Bereich (58) des Innenraums (16) des Behälters (12) mündet.

4. Vorrichtung nach einem der Ansprüche 1 bis 3, **dadurch gekennzeichnet, dass** der Schraubenschaft (40) von unten durch den Boden (28) des Unterteils (24) durchgeführt und mit einem Gewinde am Oberteil (22) verschraubt ist, wobei ein Schraubenkopf (42) der Schraube (38) gegen die Unterseite des Bodens (28) des Unterteils (24) anliegt.

5. Vorrichtung nach Anspruch 4, **dadurch gekennzeichnet, dass** das Ausgleichsbehältnis (14) gasdicht am Schraubenkopf (42) festgelegt ist.

6. Vorrichtung nach Anspruch 4 oder 5, **dadurch gekennzeichnet, dass** die Ausgleichsleitung (60) eine axial durch den Schraubenkopf (42) hindurchgehende Bohrung (68a, 68b) aufweist, die in das Ausgleichsbehältnis (14) mündet.

7. Vorrichtung nach einem der Ansprüche 1 bis 6, **dadurch gekennzeichnet, dass** das Ausgleichsbehältnis (14) an seinem freien Ende eine Abschlussplatte (54) aufweist, die sich bei einem einen vorbestimmten Druck überschreitenden Überdruck im Ausgleichsbehältnis (14) ablöst.

8. Vorrichtung nach einem der Ansprüche 1 bis 7, **dadurch gekennzeichnet, dass** das Unterteil (24) ein den Boden (28) des Unterteils (24) bildendes Bodenteil (26) aufweist, wobei eine innenseitige Bodenfläche (70) des Bodenteils (26) radial nach außen ein Gefälle aufweist, und dass an dem Bodenteil (26) ein vorzugsweise verschwenkbarer Anschluss (72) für eine Verbindungsleitung (74) zu dem zu überwachenden Ventilinnenraum angeordnet ist.

9. Vorrichtung nach einem der Ansprüche 1 bis 8, **dadurch gekennzeichnet, dass** das Unterteil (24) eine sich im wesentlichen vom Boden (78) bis zum Oberteil (22) erstreckende durchsichtige Umfangswand (30) aufweist.

10. Vorrichtung nach Anspruch 9, **dadurch gekennzeichnet, dass** am Oberteil (22) innenseitig eine Lichtquelle (88, 90) zur Beleuchtung des Innenraums (16) des Behälters (12) angeordnet ist.

11. Vorrichtung nach einem der Ansprüche 1 bis 10, **dadurch gekennzeichnet, dass** das Oberteil (22) ein Messmodul (36) mit Steuerelektronik zum Messen eines oder mehrerer Zustände der Flüssigkeit (18) im Innenraum (16) des Behälters (12) aufweist, wobei das Oberteil (22) ein Deckelteil (34) aufweist, an dem das Messmodul (36) lösbar befestigt ist.

## Claims

1. A device for monitoring a hermetically sealed valve interior of an aseptic valve for the chemical or food industry, comprising a container (12), the interior (16) of which can be filled with a liquid (18) and be connected to the valve interior to be monitored in a liquid-conducting fashion, wherein the container (12) has an upper part (22) and a lower part (24) connected to one another, and comprising a compensating vessel (14), which is connected to the interior (16) of the container (12) via a compensating line (60), **characterized in that** the upper part (22) and the lower part (24) are held together by a connecting element configured as a screw (38), an elongated screw shaft (40) of the screw (38) extending from a base (28) of the lower part (24) through the interior (16) of the container (12) to the upper part (22), and **in that** the compensating vessel (14) is disposed below the base (28) of the lower part (24), and **in that** the compensating line (60) extends from an upper region (58) of the interior (16) of the container (12) through the base (28) of the lower part (24).

2. The device of claim 1, **characterized in that** the compensating line (60) is formed by a cavity which is present on the inner side of the screw shaft (40) and opens out into the upper region (58) of the interior (16) of the container (12).

3. The device of claim 1, **characterized in that** the compensating line (60) is formed by a hollow tube (62) which surrounds the screw shaft (40) and opens out into the upper region (58) of the interior (16) of the container (12).

4. The device of any one of claims 1 through 3, **characterized in that** the screw shaft (40) is inserted from below through the base (28) of the lower part (24) and is screwed to a thread on the upper part (22), a screw head (42) of the screw (38) bearing against the underside of the base (28) of the lower part (24).

5. The device of claim 4, **characterized in that** the compensating vessel (14) is fixed to the screw head (42) in a gas-tight manner.

6. The device of claim 4 or 5, **characterized in that** the compensating line (60) has a bore (68a, 68b) which passes axially through the screw head (42) and opens out into the compensating vessel (14).

7. The device of any one of claims 1 through 6, **characterized in that** the compensating vessel (14) has at its free end an end plate (54), which detaches itself if an overpressure in the compensating vessel (14) exceeds a predefined pressure.

8. The device of any one of claims 1 through 7, **characterized in that** the lower part (24) has a base part (26) forming the base (28) of the lower part (24), an inside base surface (70) of the base part (26) having a downslope extending radially outward, and a preferably pivotable connector (72) for a connecting line (74) to the valve interior to be monitored being disposed on the base part (26).

9. The device of any one of claims 1 through 8, **characterized in that** the lower part (24) has a transparent peripheral wall (30) extending essentially from the base (78) to the upper part (22).

10. The device of claim 9, **characterized in that** on the inner side of the upper part (22) there is disposed a light source (88, 90) for illuminating the interior (16) of the container (12).

11. The device of any one of claims 1 through 10, **characterized in that** the upper part (22) has a measuring module (36) with control electronics for measuring one or more states of the liquid (18) in the interior (16) of the container (12), the upper part (22) having a lid part (34) to which the measuring module (36) is detachably fastened.

## Revendications

1. Dispositif permettant de contrôler un espace intérieur de soupape hermétiquement étanche d'une soupape aseptique pour l'industrie chimique ou alimentaire, avec un récipient (12), dont l'espace intérieur (16) peut être rempli d'un liquide (18) et peut être relié de manière à conduire le liquide à l'espace intérieur de soupape à contrôler, le récipient (12) présentant une partie supérieure (22) et une partie inférieure (24) qui sont reliées l'une à l'autre, et avec un réservoir de compensation (14) qui est relié à l'espace intérieur (16) du récipient (12) par une conduite de compensation (60), **caractérisé en ce que** la partie supérieure (22) et la partie inférieure (24) sont maintenues par un élément de liaison réalisé comme une vis (38), un corps (40) de la vis (38) étiré en longueur s'étendant d'un fond (28) de la partie inférieure (24) par l'espace intérieur (16) du récipient (12) jusqu'à la partie supérieure (22), et **en ce que** le récipient de compensation (14) est disposé sous le fond (28) de la partie inférieure (24) et **en ce que** la conduite de compensation (60) s'étend d'une zone (58) supérieure de l'espace intérieur (16) du récipient (12) à travers le fond (28) de la partie inférieure (24).

2. Dispositif selon la revendication 1, **caractérisé en ce que** la conduite de compensation (60) est formée par un espace creux présent côté intérieur dans le corps de vis (40), qui débouche dans la zone (58) supérieure de l'espace intérieur (16) du récipient (12).

3. Dispositif selon la revendication 1, **caractérisé en ce que** la conduite de compensation (60) est formée par un tube creux (62) entourant le corps de vis (40) qui débouche dans la zone (58) supérieure de l'espace intérieur (16) du récipient (12).

4. Dispositif selon l'une quelconque des revendications 1 à 3, **caractérisé en ce que** le corps de vis (40) passe par le bas par le fond (28) de la partie inférieure (24) et est vissé à un filetage sur la partie supérieure (22), une tête (42) de la vis (38) reposant contre le côté inférieur du fond (28) de la partie inférieure (24).

5. Dispositif selon la revendication 4, **caractérisé en ce que** le récipient de compensation (14) est fixé de manière étanche au gaz sur la tête de vis (42).

6. Dispositif selon la revendication 4 ou 5, **caractérisé en ce que** la conduite de compensation (60) présente un perçage (68a, 68b) traversant axialement la tête de vis (42), qui débouche dans le récipient de compensation (14).

7. Dispositif selon l'une quelconque des revendications 1 à 6, **caractérisé en ce que** le récipient de compensation (14) présente sur son extrémité libre une plaque terminale (54) qui se détache lors d'une surpression dépassant une pression prédéterminée dans le récipient de compensation (14).

8. Dispositif selon l'une quelconque des revendications 1 à 7, **caractérisé en ce que** la partie inférieure (24) présente une partie de fond (26) formant le fond (28) de la partie inférieure (24), une surface de fond (70) côté intérieur de la partie de fond (26) présentant radialement vers l'extérieur une pente et **en ce que** sur la partie de fond (26) est disposé un raccord (72) de préférence pivotant pour une conduite de liaison (74) à l'espace intérieur de soupape à contrôler.

9. Dispositif selon l'une quelconque des revendications 1 à 8, **caractérisé en ce que** la partie inférieure (24) présente une paroi périphérique (30) transparente s'étendant essentiellement du fond (78) à la partie supérieure (22).

10. Dispositif selon la revendication 9, **caractérisé en ce que** sur la partie supérieure (22), une source de lumière (88, 90) est disposée côté intérieur pour l'éclairage de l'espace intérieur (16) du récipient (12).

11. Dispositif selon l'une quelconque des revendications 1 à 10, **caractérisé en ce que** la partie supérieure (22) présente un module de mesure (36) avec une électronique de commande pour la mesure d'un ou de plusieurs états de liquide (18) dans l'espace intérieur (16) du récipient (12), la partie supérieure (22) présentant une partie de couvercle (34), sur laquelle le module de mesure (36) est fixé de manière amovible.
